# EUROPÄISCHE PATENTSCHRIFT

(11) **EP 1 612 134 B1**
(45) Veröffentlichungstag und Bekanntmachung des Hinweises auf die Patenterteilung: **07.11.2007**
(21) Anmeldenummer: 04015088.0
(22) Anmeldetag: 28.06.2004
(51) Int. Cl.: B62K 21/06, B62K 19/16, B62K 21/16, B62K 21/02

(54) **Vorderradgabel für Fahrräder**
Front fork for bicycles
Fourche avant pour bicyclettes

(43) Veröffentlichungstag der Anmeldung: 04.01.2006
(73) Patentinhaber: BMC Trading AG, 2540 Grenchen (CH)
(72) Erfinder: Singenberger, Rolf, 1040 Echallens (CH); Weibel, Daniel, 4133 Pratteln (CH)
(74) Vertreter: Troesch Scheidegger Werner AG

(56) Entgegenhaltungen:
- EP-A- 0 490 120
- DE-A- 4 423 116
- DE-U- 9 415 070
- US-A- 400 074
- US-A- 4 008 903

## Beschreibung

Die vorliegende Erfindung betrifft eine Vorderradgabel nach dem Oberbegriff von Anspruch 1 sowie einen Rahmen und Vorderradgabel nach dem Oberbegriff von Anspruch 10.

Aus der US 4008903 A ist eine Fahrrad-Vorderradgabel mit den Merkmalen des Oberbegriffes des Anspruchs 1 bekannt.

Herkömmlicherweise werden Fahrradgabeln aus Metall ausgeführt, wobei die beiden parallel angeordneten Gabelarme, zwischen denen das Vorderrad angeordnet und fixiert ist, an ihrem oberen Ende in einen zylindrischen Gabelkopf münden, welcher in einem am Rahmen des Fahrrades angeordneten Lenkrohres drehbar gelagert und gehalten ist. Die Lenkstange ist in der Regel am oberen Ende des Gabelkopfes lösbar und verstellbar mit dem Gabelkopf verbunden.

Aus Stabilitätsgründen muss die Drehachse des Vorderrades vor der Drehachse des Gabelkopfes angeordnet sein, so dass die Gabelarme in der Regel eine nach vorne gebogene oder abgewinkelte Form aufweisen. Damit kommt die Aufnahme der Achsbefestigung des Vorderrades vor der Drehachse des Gabelkopfes zu liegen.

Aus der EP 0 490 120 B1 ist eine Fahrrad-Vorderradgabel bekannt, welche aus einem Verbundwerkstoff besteht, und bei welchem der Gabelkopf zwei Vorsprünge zur Aufnahme von zylindrischen Zapfen aufweist, welche in den zwischen diese beiden Vorsprünge anzuordnenden Lenkkopf des Rahmens des Fahrrades eingeführt werden können und damit die Fahrrad-Vorderradgabel drehbar im Rahmen lagern.

Der Nachteil bei dieser Lösung besteht darin, dass die im Gabelkopf angeordneten Zapfen mit diesem entweder fest oder verdrehbar verbunden sein müssen. Da die Zapfen in der Regel aus Metall bestehen und die Vorderradgabel aus einem Verbundwerkstoff besteht, treten dabei Verbindungsprobleme auf, welche sich negativ auf die Haltbarkeit und Belastbarkeit auswirken.

Die Aufgabe der vorliegenden Erfindung bestand nun darin, eine Vorderradgabel zu finden, welche einerseits eine einfache Verbindung mit dem Rahmen erlaubt und andererseits ein hohe Stabilität und Betriebssicherheit aufweist. Weiter soll die Verbindung einfach gelöst werden können und ggf. die Vorderradgabel aus einem nicht-metallischen Werkstoff bestehen werden.

Diese Aufgabe wird erfindungsgemäss mit einer Vorderradgabel mit den Merkmalen nach Anspruch 1 gelöst.

Weitere, bevorzugte Ausführungsformen ergeben sich aus den Merkmalen der weiteren Ansprüche 2 bis 11.

Bei einer Vorderradgabel für Fahrräder, mit einem Gabelkopf und zwei davon abragenden Gabelarmen, wobei der Gabelkopf zwei nach Aussen abstehende Befestigungsflansche aufweist, mit jeweils einer in einer gemeinsamen Achse liegenden Bohrung, sind vorteilhaft die Bohrungen zur formschlüssigen Aufnahme von Lagern und/oder Achsbolzen ausgebildet.

Der obere Befestigungsflansch bildet den oberen Abschluss des Gabelkopfes, welcher nach vorne, zur von den Befestigungsflanschen abgewandten Seite, eine konvexe Wölbung aufweist. Damit wird eine sehr kompakte Form des Gabelkopfes geschaffen, welcher damit auch aerodynamisch besonders vorteilhaft ausgestaltet ist.

Vorzugsweise ist die Gabel einstückig aus Kunststoff bestehend ausgebildet, vorzugsweise in Faserverbundwerkstoff. Damit wird ein sehr leichtes und stabiles Teil geschaffen. Durch die erfindungsgemässe Ausbildung der Befestigungselemente wird eine zuverlässige Verbindung mit dem Rahmen garantiert.

Vorzugsweise ist im Bereich des Kopfes und/oder Vorderseite des Gabelkopfes eine Lenkstangenhalterung direkt am Gabelkopf angebracht. Weiter vorzugsweise ist diese Lenkstangenhalterung mit dem Gabelkopf verleimt. Durch eine entsprechende Formgebung kann auch hier eine aerodynamisch vorteilhafte Formgebung erzielt werden und der Fahrwiderstand reduziert werden.

Vorzugsweise ist im Bereich des Kopfes und/oder Vorderseite des Gabelkopfes an der Aussenseite mindestens eine Führungsnut oder ein Führungsprofil zur Aufnahme einer Lenkstangenhalterung ausgebildet. Damit kann die Vorderradgabel mit unterschiedlichen Lenkstangenhalterungen ausgerüstet werden, entsprechend den jeweiligen Anforderungen.

Vorzugsweise ist im Bereich des Kopfes und/oder Vorderseite des Gabelkopfes ein Schlitz ausgebildet, wobei mindestens bereichsweise an der Aussenseite um den Schlitz eine strukturierte Oberfläche ausgebildet ist, vorzugsweise in Form von Zähnen, Wellen oder Nuten. Durch den Schlitz kann ein Befestigungsmittel, beispielsweise ein Schraube, hindurchgeführt werden, um eine Lenkstangenhalterung zu fixieren. Durch den Schlitz lässt sich das Befestigungsmittel über die Länge des Schlitzes verschieben und damit die Position der Lenkstangenhalterung praktisch beliebig festlegen resp. verstellen. Durch die strukturierte Oberfläche lässt sich die Position der Lenkstangenhalterung fixieren und ohne übermassigen Kraftaufwand auch nicht mehr verschieben. So lässt sich die Lenkstangenhalterung beispielsweise mit einer einzigen Schraube oder ggf. zwei Schrauben sicher und zuverlässig am Gabelkopf befestigen.

Vorzugsweise ist im Bereich des Kopfes und/oder Vorderseite des Gabelkopfes eine nach Aussen gewölbte Ausbuchtung ausgebildet, welche in der Wand oder an der Innenseite ein Befestigungsmittel, vorzugsweise ein Gewinde, aufweist. Damit lässt sich beispielsweise einfach eine Lenkstangenhalterung am Gabelkopf befestigen, welche eine entsprechend der Ausbuchtung ausgeformte Einbuchtung aufweist. Vorteilhaft lässt sich damit die Lenkstangenhalterung in gewissen Grenzen verdrehen oder rotieren, um eine optimale Position zu erreichen.

Vorzugsweise sind im Bereich des Kopfes und/oder Vorderseite des Gabelkopfes ein Gelenklager zur gelenkigen Befestigung einer Lenkstangehalterung sowie eine ebenfalls gelenkig angeordnete, nach Aussen vorstehende Gewindestange ausgebildet. Damit lässt sich eine Lenkstangenhalterung zuverlässig am Gabelkopf befestigen, wobei eine einfache Einstellmöglichkeit in Bezug auf die relative Winkellage zwischen dem Gabelkopf und der Lenkstangenhalterung gegeben ist.

Vorzugsweise ist am Gabelkopf achsparallel zu den Bohrungen ein nach oben abragender Zylinder für die Aufnahme einer Lenkstangenhalterung ausgebildet. Damit lässt sich vorteilhaft eine herkömmliche Lenkstangenhalterung anbringen, wie sie für herkömmliche Vorderradgabeln und Rahmen vorhanden sind.

Die Aufgabe wird weiter erfindungsgemäss durch einen Rahmen und Vorderradgabel entsprechend den vorhergehenden Ausführungen für Fahrräder gelöst, wobei am Rahmen ein Lenkkopf zur Befestigung der Vorderradgabel angeordnet ist, und wobei der Lenkkopf als zylindrische Büchse ausgebildet ist und jeweils zwischen dem Lenkkopf und dem jeweiligen Befestigungsflansch ein Lager angeordnet ist. Damit lässt sich einfach eine Verbindung zwischen Rahmen und Vorderradgabel realisieren, welche einerseits eine präzise Führung der Vorderradgabel garantiert und andererseits eine hohe Belastbarkeit aufweist. Weiter weist diese Befestigung sehr gute aerodynamische Werte auf, so dass ein sehr kleiner Luftwiderstand resultiert.

Vorzugsweise ist für die Verbindung des Rahmens mit der Vorderradgabel ein Bolzen, vorzugsweise ein hohlzylindrisches Rohr, in die Bohrungen der Befestigungsflansche eingesetzt und befestigt, welches durch den Lenkkopf hindurch geführt ist. Der Bolzen lässt sich einfach anbringen und ggf. auch einfach wieder demontieren. Das Material des Bolzens kann unabhängig vom Material der Vorderradgabel und/oder des Rahmens gewählt werden, so dass ein optimales Verhältnis zwischen Festigkeit und Gewicht erzielt werden kann.

Weiter vorzugsweise sind im Lenkkopf Gewindebohrungen ausgebildet und es ist jeweils von jedem Befestigungsflansch ein drehbar durch den jeweiligen Befestigungsflansch hindurchgeführter Bolzen in die zugehörige Gewindebohrung eingeschraubt. Damit wird die Befestigung durch zwei separate Teile resp. Bolzen realisiert. Dies führt u.a. zu einer Gewichtsersparnis, da die Bolzen auf die absolut notwendige Grösse reduziert ausgebildet werden können.

Die erfindungsgemässe Konstruktion erlaubt somit eine ideale Integration von Rahmen, Vorderradgabel und dem Vorbau resp. Lenkstangenhalter. Sie kann sowohl in Metall wie auch in Verbundwerkstoff oder gemischter Bauweise aufgebaut sein und weist neben sehr guten aerodynamischen Eigenschaften auch eine sehr hohe Stabilität und damit Sicherheit auf.

Vorteilhaft erlaubt die erfindungsgemässe Konstruktion weiter eine einfache individuelle Anpassung des Vorbaues resp. Lenkstangehalters für den Benutzer des Fahrrades. Dieser kann damit auf Mass für den Benutzer angepasst werden, was insbesondere für die Verwendung im Hochleistungssport von entscheidender Bedeutung ist.

Ausführungsbeispiele der vorliegenden Erfindung werden nachstehend anhand von Figuren noch näher erläutert. Es zeigen
Fig. 1 schematisch die Teilansicht auf den vorderen Bereich eines Fahrradrahmens mit erfindungsgemässer Vorderradgabel vor der Montage;
Fig. 2 der Längsschnitt durch eine erfindungsgemäss ausgebildete Vorderradgabel in einer alternativen Ausführungsform;
Fig. 3 die Teilansicht des Kopfbereiches einer erfindungsgemässen Vorderradgabel mit einer Lenkstangenhalterung;
Fig. 4 der Längsschnitt durch den Kopfbereich einer alternativen Ausführungsform einer erfindungsgemässen Vorderradgabel mit Lenkstangenhalterung;
Fig. 5 der Längsschnitt durch den Kopfbereich einer weiteren alternativen Ausführungsform einer erfindungsgemässen Vorderradgabel mit Lenkstangenhalterung;
Fig. 6 die Ansicht des Kopfbereichs einer weiteren alternativen Ausführungsform einer erfindungsgemässen Vorderradgabel;
Fig. 7 den Querschnitt durch die Vorderradgabel nach Figur 6 mit eingesetzter Lenkstangenhalterung;
Fig. 8 der Längsschnitt durch den Kopfbereich einer weiteren alternativen Ausführungsform einer erfindungsgemässen Vorderradgabel mit Lenkstangenhalterung; und
Fig. 9 die Ansicht des Kopfbereiches einer weiteren alternativen Ausführungsform einer erfindungsgemässen Vorderradgabel mit Lenkstangenhalterung.

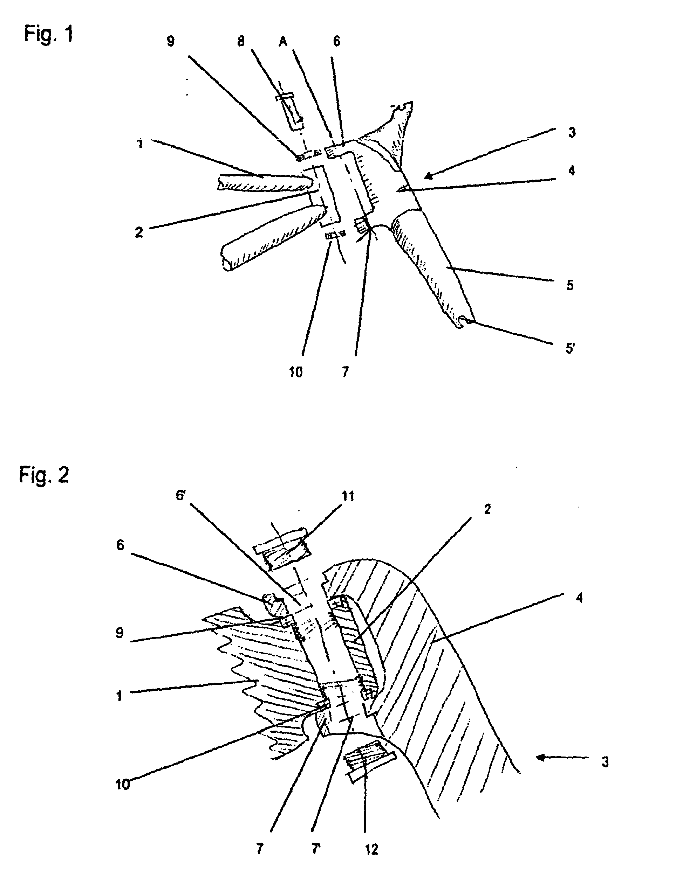

Figur 1 zeigt schematisch in der Teilansicht den vorderen Bereich eines Fahrradrahmens 1 mit einem Lenkkopf 2 in Form einer zylindrischen Büchse. Die erfindungsgemäss ausgestaltete Vorderradgabel 3 weist zwei seitlich vom Gabelkopf 4 nach unten abragende Gabelarme 5 auf, welche an ihrem unteren Ende 5' Schlitze zur lösbaren Befestigung des Vorderrades (der Übersichtlichkeit halber nicht dargestellt) aufweisen.

Der Gabelkopf 4 weist zwei nach hinten abragende Befestigungsflansche 6 und 7 auf, welche jeweils eine koaxial angeordnete Bohrung aufweisen. Der Lenkkopf 2 kann zwischen die beiden Befestigungsflansche 6 und 7 eingeschoben werden und mit einem Bolzen 8 mit dem Gabelkopf 4 resp. der Vorderradgabel 3 um die Lenkachse A schwenkbar verbunden werden.

Zwischen dem Lenkkopf2 und den beiden Befestigungsflanschen 6 resp. 7 ist jeweils noch ein Lager 9 resp. 10 angeordnet, um ein leichtes Verdrehen resp. Verschwenken der Vorderradgabel 3 um die Lenkachse A zu gewährleisten.

In Figur 2 ist schematisch der Längsschnitt durch eine alternative Ausführungsform einer erfindungsgemässen Vorderradgabel 3 dargestellt. Dabei wird der Lenkkopf 2 mittels zwei Schraubenbüchsen 11 und 12, jeweils von unten resp. von oben, drehbar mit dem Rahmen 1 verbunden. Die beiden Befestigungsflansche 6 und 7 weisen hierfür jeweils eine zweistufige Bohrung 6' resp. 7' auf, mit nach Aussen grösserem Durchmesser und in Innen kleinerem Durchmesser.

Zwischen den Befestigungsflanschen 6 und 7 und dem Lenkkopf 2 sind jeweils die Lager 9 resp. 10 angeordnet. Diese sind vorteilhaft am Lenkkopf 2 angebracht resp. gehalten und ermöglichen eine praktisch reibungsfreie und spielfreie Drehbewegung zwischen Rahmen 1 und Gabelkopf 4 resp. Vorderradgabel 3. Die Anordnung der Lager 9 resp. 10 am Lenkkopf 2 ermöglicht eine besonders gute Befestigung der Lager, insbesondere, wenn der Lenkkopf 2 beispielsweise in Metall ausgeführt ist, oder zumindest eine Büchse aus Metall aufweist. Weiter kann damit auch das Innengewinde für die Schraubenbüchsen 11 resp. 12 direkt im Lenkkopf 2 ausgebildet werden und erlaubt eine stabile Verbindung mit hoher Belastbarkeit. Vorteilhaft können die beiden Schraubenbüchsen 11 resp. 12 verhältnismässig kurz ausgebildet sein und damit eine Reduktion des Gewichtes der Verbindung im Vergleich zur Verwendung eines durchgehenden Bolzens bewirken.

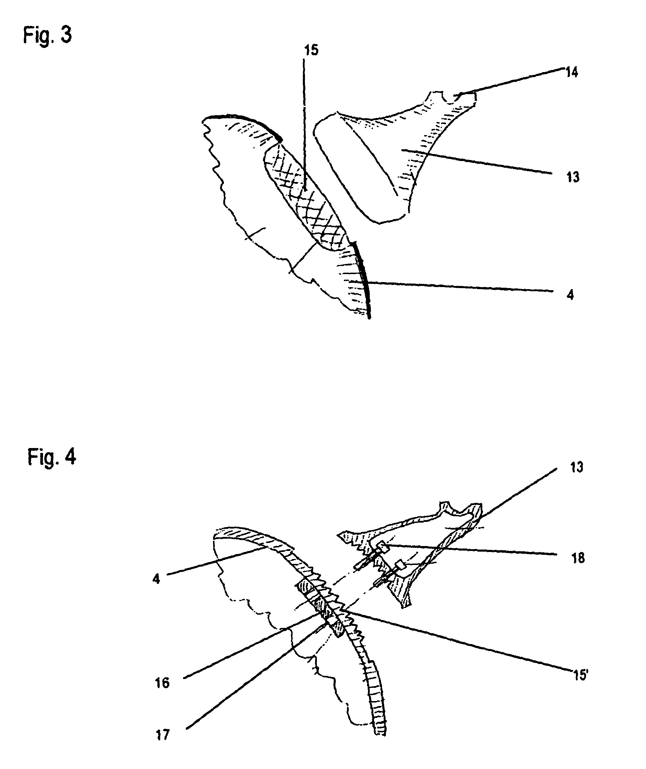

In Figur 3 ist die Anordnung eines Vorbaues am Lenkkopf 4 in Form einer Lenkstangenhalterung 13 dargestellt. Die Lenkstangenhalterung 13 weist an ihrem nach vorne weisendem Ende eine Nut 14 zur Aufnahme resp. Befestigung einer Lenkstange (der Übersichtlichkeit halber nicht dargestellt) auf. Die Lenkstangehalterung 13 wird an der vorderen Front des Lenkkopfes 4 verleimt, vorzugsweise über eine nach Innen abgesetzte Verbindungsfläche 15 in der Oberfläche des Lenkkopfes 4. Damit wird eine zusätzliche Verstärkung gegen Schubkräfte erreicht und es kann eine genaue Positionierung beim Anbringen der Lenkstangehalterung 13 gewährleistet werden.

In Figur 4 ist eine weitere Alternative für die Befestigung einer Lenkstangenhalterung 13 im Längsschnitt dargestellt.

Wiederum weist der Lenkkopf 4 vorteilhaft eine nach Innen abgesetzte Verbindungsfläche 15 auf, welche wenigstens bereichsweise einen strukturierte Oberfläche 15' aufweist, beispielsweise in Form von zahnartigen Rippen. An der Innenseite des vorzugsweise dünnwandigen Lenkkopfes 4 ist eine Halteplatte 16 mit Gewindebohrungen 17 angeordnet. In der ebenfalls vorteilhaft mit einen Hohlraum oder einer Aussparung 13' versehenen Lenkstangenhalterung 13 sind Schrauben 18 angeordnet, welche durch einen längs im Bereich der Verbindungsfläche 15 angeordneten Schlitz in das Innere des Lenkkopfes 4 hindurchführbar sind und in die Gewindebohrungen 17 der Halteplatte 16 eingeschraubt werden können. Damit lässt sich die Lenkstangenhalterung 13 über einen gewissen Bereich frei am Lenkkopf 4 positionieren und befestigen. Vorteilhaft weist die gegen den Lenkkopf 4 weisende Oberfläche der Lenkstangenhalterung 13 ebenfalls eine strukturierte Oberfläche auf, so dass die gewünschte Position der Lenkstangenhalterung 13 vor dem Festziehen der Schrauben 18 eingerastet werden kann und ebenfalls eine zusätzliche Aufnahme von Schubkräften auf die Lenkstangehalterung 13 ermöglicht.

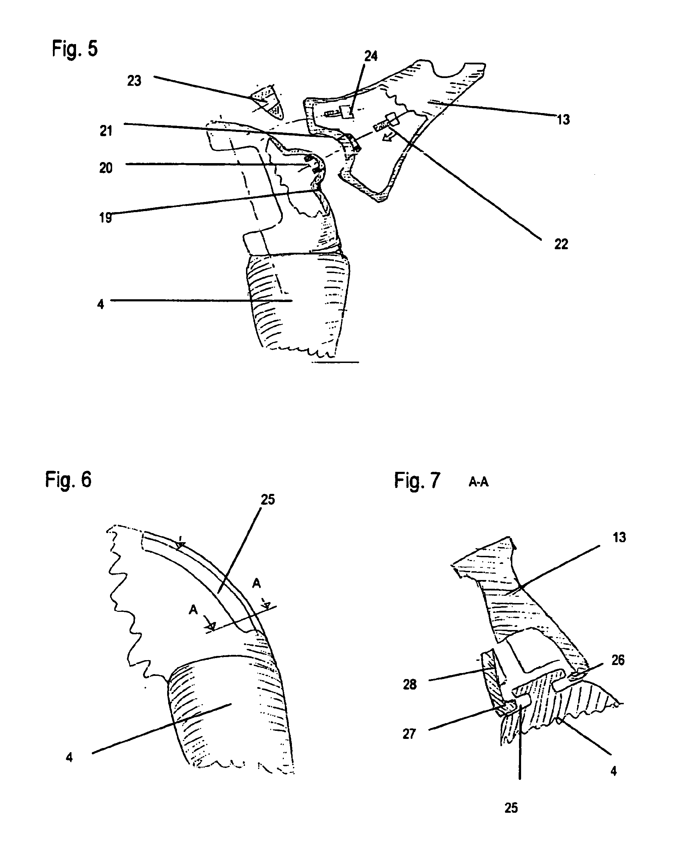

Figur 5 zeigt eine weitere, alternative Ausführungsform der Befestigung der Lenkstangenhalterung 13 am Lenkkopf 4 in Teil-Längsschnitt. Am Lenkkopf 4 ist eine nach Aussen gewölbte Ausbuchtung 19 ausgebildet, welche an ihrer Innenseite Halteplatte mit Schraubgewinde 20 aufweist. Die Lenkstangenhalterung 13 weist an ihrem dem Lenkkopf 4 zugewandten Bereich eine nach innen gewölbte Einbuchtung 21 auf. Von der Innenseite der Lenkstangenhalterung 13 kann nun durch eine Bohrung im Bereich der Einbuchtung 21 eine Schraube 22 hindurchgeführt werden und in das Schraubgewinde 20 der Halteplatte eingeschraubt werden, um die Lenkstangenhalterung 13 mit dem Lenkkopf 4 zu verbinden.

Anstelle einer Bohrung kann beispielsweise auch ein Schlitz im Bereich der Einbuchtung 21 ausgebildet sein, um damit eine flexible Positionierung der Lenkstangenhalterung 13 am Lenkkopf 4 zu ermöglichen. Zur Fixierung resp. Einstellung der Winkelstellung der Lenkstangehalterung 13 in Bezug auf den Lenkkopf 4 kann weiter ein Keil 23 zwischen der Lenkstangenhalterung 13 und dem Lenkkopf 4 eingesetzt werden und beispielsweise mittels einer weiteren Schraube 24 fixiert werden.

In den Figuren 6 und 7 ist noch einmal eine weitere Variante für die Befestigung der Lenkstangehalterung 13 am Lenkkopf 4 dargestellt. Figur 6 zeigt die Seitenansicht auf den oberen Bereich des Lenkkopfes 4 mit seitlich angeordneter Nut 25. Die Nut 25 verläuft beispielsweise bogenförmig entsprechend der Wölbung der Front des Lenkkopfes 4 in diesem Bereich.

In Figur 7 ist schliesslich der Querschnitt durch einen Bereich der Nut 25 des Lenkkopfes dargestellt, mit einer zweiteiligen Lenkstangenhalterung 13. Die Lenkstangenhalterung 13 weist dabei zwei nach Innen gebogene Flanschen 26 resp. 27 auf, welche seitlich in die beiden parallel zueinander angeordneten Nuten 25 eingreifen. Dabei ist der Flansch 27 am vom Grundkörper der Lenkstangenhalterung 13 abnehmbaren Klemmteil 28 ausgebildet. Das Klemmteil 28 kann beispielsweise in bekannter Weise mittels einer Schraube mit dem Grundkörper der Lenkstangenhalterung 13 verbunden werden und damit eine Klemmverbindung zwischen Lenkstangenhalterung 13 und Lenkkopf 4 bilden. Auch hier kann eine in der Höhe verstellbare resp. einstellbare Befestigung der Lenkstangenhalterung 13 am Lenkkopf 4 erzielt werden, wobei eine exakte Führung in Bezug auf die Längsachse des Lenkkopfes 4 gewährleistet ist.

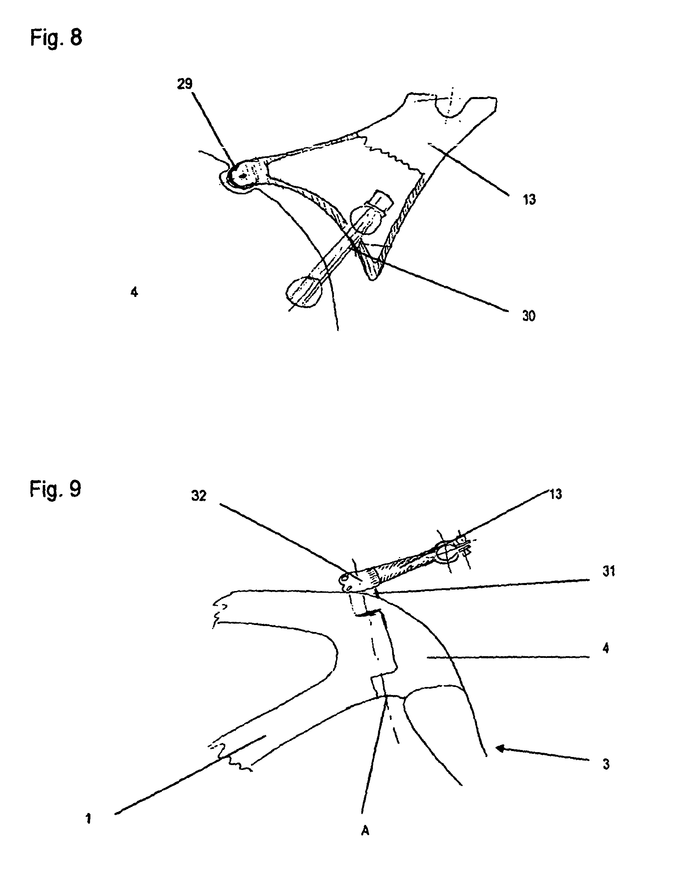

Figur 8 zeigt eine weitere Alternative für die Befestigung einer Lenkstangenhalterung 13 am Lenkkopf 4. Hier ist die Lenkstangenhalterung 13 quer schwenkbar in Bezug auf die Längsachse des Lenkkopfes 4 über ein Scharnier 29, beispielsweise in Form eines Drehbar gelagerten Zylinders, mit dem Lenkkopf 4 verbunden. An der Unterseite der Lenkstangenhalterung 13 ist eine in den Lenkkopf 4 mündende und darin ebenfalls schwenkbar gelagerte Gewindestange 30 angeordnet, welche in der Länge verstellbar mit der Lenkstangenhalterung 13 verbunden ist. Damit kann eine stabile und einfach einstellbare Verbindung der Lenkstangenhalterung 13 mit dem Lenkkopf 4 erreicht werden.

In Figur 9 ist schliesslich noch einmal eine alternative Befestigungseinrichtung einer Lenkstangenhalterung 13 am Lenkkopf 4 in der Seitenansicht dargestellt. Dabei weist der Lenkkopf 4 achsparallel in Bezug auf die Lenkachse A nach oben abragenden Zylinder resp. Rohrstummel 31 auf, an welchem die Lenkstangehalterung 13 angeklemmt werden kann. Hierfür weist die Lenkstangenhalterung 13 eine Rohrklemme 32 auf, wie sie für die Verwendung bei herkömmlichen Lenkstangen eingesetzt wird.

Die Gabel 3 und der Gabelkopf 4 können sowohl in herkömmlicher Bauweise aus Metall bestehen, oder aber vorteilhaft in Gemischtbauweise oder reiner faserverstärkten Kunststoffbauweise aufgebaut sein. Gerade die erfindungsgemässe Ausbildung der Befestigungsflansche 6 resp. 7 mit den Bohrungen 6' resp. 7' eignen sich besonders gut auch für eine Ausführung in Kunststoff, resp. faserverstärktem Kunststoff, da keine direkten Verbindungen zu den Lenk- resp. Drehelementen der Gabel 3 erfolgen. Insbesondere die Anordnung der Lager 9 resp. 10 sowie der Befestigung des Bolzens 8 resp. der Schraubenbüchsen 11 resp. 12 im Lenkkopf 2 des Rahmens 1 bewirken diesen Vorteil.

## Patentansprüche

1. Vorderradgabel (3) für Fahrräder, mit einem Gabelkopf (4) und zwei davon abragenden Gabelarmen (5), wobei der einstückige Gabelkopf (4) zwei nach Aussen abstehende Befestigungsflansche (6,7) aufweist, ein oberer (6) und ein unterer (7) Flansch, mit jeweils einer in einer gemeinsamen Achse (A) liegenden Bohrung (6',7'), zur formschlüssigen Aufnahme von Lagern (9;10) und/oder Achsbolzen (8; 11,12), **dadurch gekennzeichnet, dass** der Gabelkopf (4) nach vorne, zur von den Befestigungsflanschen (6,7) abgewandten Seite, eine konvex gewölbte, stetige Oberfläche aufweist welche ebenfalls stetig unmittelbar in den oberen Rand des oberen Befestigungsflansches (6) übergeht.

2. Vorderradgabel nach Anspruch 1, **dadurch gekennzeichnet, dass** sie aus Kunststoff besteht, vorzugsweise aus Faserverbundwerkstoff.

3. Vorderradgabel nach Anspruch 1 oder 2, **dadurch gekennzeichnet, dass** im Bereich der Oberseite und/oder Vorderseite des Gabelkopfes (4) eine Lenkstangenhalterung (13) direkt am Gabelkopf (4) angebracht ist, vorzugsweise mit dem Gabelkopf (4) verleimt ist.

4. Vorderradgabel nach Anspruch 1 oder 2, **dadurch gekennzeichnet, dass** im Bereich der Oberseite und/oder Vorderseite des Gabelkopfes (4) an der Aussenseite mindestens eine Führungsnut oder ein Führungsprofil zur Aufnahme einer Lenkstangenhalterung ausgebildet ist.

5. Vorderradgabel nach Anspruch 1 oder 2, **dadurch gekennzeichnet, dass** im Bereich der Oberseite und/oder Vorderseite des Gabelkopfes (4) ein Schlitz ausgebildet ist, wobei mindestens bereichsweise an der Aussenseite (15) um den Schlitz eine strukturierte Oberfläche (15') ausgebildet ist, vorzugsweise in Form von Zähnen, Wellen oder Nuten.

6. Vorderradgabel nach Anspruch 1 oder 2, **dadurch gekennzeichnet, dass** im Bereich der Oberseite und/oder Vorderseite des Gabelkopfes (4) eine nach Aussen gewölbte Ausbuchtung (19) ausgebildet ist, welche in der Wand oder an der Innenseite ein Befestigungsmittel (20), vorzugsweise ein Gewinde, aufweist.

7. Vorderradgabel nach Anspruch 1 oder 2, **dadurch gekennzeichnet, dass** im Bereich der Oberseite und/oder Vorderseite des Gabelkopfes (4) ein Gelenklager (29) zur gelenkigen Befestigung einer Lenkstangehalterung (13) sowie eine ebenfalls gelenkig angeordnete, nach Aussen vorstehende Gewindestange (30) ausgebildet sind.

8. Vorderradgabel nach Anspruch 1 oder 2, **dadurch gekennzeichnet, dass** am Gabelkopf (4) achsparallel zu den Bohrungen (6',7') ein nach oben abragender Zylinder (32) für die Aufnahme einer Lenkstangenhalterung (13) ausgebildet ist.

9. Vorderradgabel nach einem der Ansprüche 1 bis 8 mit Rahmen (1), wobei am Rahmen (1) ein Lenkkopf (2) zur Befestigung der Vorderradgabel (3) angeordnet ist, **dadurch gekennzeichnet, dass** der Lenkkopf (2) als zylindrische Büchse ausgebildet ist und jeweils zwischen dem Lenkkopf (2) und dem jeweiligen Befestigungsflansch (6,7) ein Lager angeordnet ist.

10. Vorderradgabel mit Rahmen (1) nach Anspruch 9, **dadurch gekennzeichnet, dass** für die Verbindung des Rahmens (1) mit der Vorderradgabel (3) ein Bolzen (8), vorzugsweise ein hohlzylindrisches Rohr, in die Bohrungen (6',7') der Befestigungsflansche (6,7) eingesetzt und befestigt ist, welches durch den Lenkkopf (2) hindurch geführt ist.

11. Vorderradgabel mit Rahmen (1) nach Anspruch 9, **dadurch gekennzeichnet, dass** im Lenkkopf (2) Gewindebohrungen ausgebildet sind und jeweils von jedem Befestigungsflansch (6,7) ein drehbar durch den jeweiligen Befestigungsflansch (6;7) hindurchgeführter Gewindebolzen (11,12) in die zugehörige Gewindebohrung eingeschraubt ist.

## Claims

1. Front fork (3) for bicycles, with a fork head (4) and two fork arms (5) protruding therefrom, the single-piece fork head (4) having two outwardly projecting fastening flanges (6, 7), an upper flange (6) and a lower flange (7), with a respective hole (6', 7') lying on a common axis (A), for the form-fitting holding of bearings (9; 10) and/or axial bolts (8; 11, 12), **characterized in that** the fork head (4) has a convexly curved, continuous surface to the front, to the side which faces away from the fastening flanges (6, 7), which surface likewise continuously merges directly into the upper edge of the upper fastening flange (6).

2. Front fork according to Claim 1, **characterized in that** it is made from plastic, preferably from fibre composite material.

3. Front fork according to Claim 1 or 2, **characterized in that** a handlebar holder (13) is fitted directly to the fork head (4), preferably is adhesively bonded to the fork head (4), in the region of the top and/or front side of the fork head (4).

4. Front fork according to Claim 1 or 2, **characterized in that** at least one guide groove or guide profile for receiving a handlebar holder is formed on the outside in the region of the top and/or front side of the fork head (4).

5. Front fork according to Claim 1 or 2, **characterized in that** a slot is formed in the region of the top and/or front side of the fork head (4), with a textured surface (15'), preferably in the form of teeth, shafts or grooves, being formed at least in some regions on the outside (15) around the slot.

6. Front fork according to Claim 1 or 2, **characterized in that** an outwardly curved bulge (19) is formed in the region of the top and/or front side of the fork head (4) and has a fastening means (20), preferably a thread, in the wall or on the inside.

7. Front fork according to Claim 1 or 2, **characterized in that** an articulated bearing (29) for the articulated fastening of a handlebar holder (13) and a threaded rod (30), which is likewise arranged in an articulated manner and protrudes outwards, are formed in the region of the top and/or front side of the fork head (4).

8. Front fork according to Claim 1 or 2, **characterized in that** an upwardly protruding cylinder (32) for receiving a handlebar holder (13) is formed on the fork head (4) axially parallel to the holes (6', 7').

9. Front fork according to one of Claims 1 to 8 having a frame (1), with a steering head (2) for the fastening of the front fork (3) being arranged on the frame (1), **characterized in that** the steering head (2) is designed as a cylindrical bushing and a bearing is arranged in each case between the steering head (2) and the respective fastening flange (6, 7).

10. Front fork having a frame (1) according to Claim 9, **characterized in that**, for the connection of the frame (1) to the front fork (3), a bolt (8), preferably a hollow cylindrical tube, is inserted into the holes (6', 7') of the fastening flanges (6, 7) and fastened and is guided through the steering head (2).

11. Front fork having a frame (1) according to Claim 9, **characterized in that** threaded holes are formed in the steering head (2), and, in each case from each fastening flange (6, 7), a threaded bolt (11, 12), which is guided rotatably through the respective fastening flange (6; 7), is screwed into the associated threaded hole.

## Revendications

1. Fourche avant (3) pour bicyclettes, comprenant une tête de fourche (4) et deux bras (5) qui dépassent de celle-ci, la tête de fourche (4) étant d'une seule pièce et présentant deux brides de fixation (6, 7) qui dépassent vers l'extérieur, une bride supérieure (6) et une bride inférieure (7), et qui ont chacune un perçage (6', 7') situé dans un axe commun (A), conçus pour recevoir par complémentarité de forme des paliers (9 ; 10) et/ou des chevilles (8 ; 11, 12), **caractérisé en ce que** la tête de fourche (4) présente vers l'avant sur le côté opposé aux brides de fixation (6,7) une surface continue bombée convexe, passant également de façon continue directement dans le bord supérieur de la bride de fixation supérieure (6).

2. Fourche avant selon la revendication 1, **caractérisée en ce qu'**elle est réalisée en matière plastique, de préférence en matière composite renforcée par des fibres.

3. Fourche avant selon la revendication 1 ou 2, **caractérisée en ce qu'**une fixation de guidon (13) est montée directement sur la tête de fourche (4), de préférence par collage, dans la zone du haut et/ou de la face avant de la tête de fourche (4).

4. Fourche avant selon la revendication 1 ou 2, **caractérisée en ce qu'**au moins une rainure de guidage ou un profilé de guidage destiné à recevoir une fixation de guidon est formé dans la zone du haut et/ou de la face avant de la tête de fourche (4), sur le côté extérieur.

5. Fourche avant selon la revendication 1 ou 2, **caractérisée en ce qu'**une fente est formée dans la zone du haut et/ou de la face avant de la tête de fourche (4), une surface structurée (15'), de préférence sous la forme de dents, d'ondulations ou de rainures, étant formée au moins par zones sur le côté extérieur (15), autour de la fente.

6. Fourche avant selon la revendication 1 ou 2, **caractérisée en ce qu'**il est prévu dans la zone du haut et/ou de la face avant de la tête de fourche (4) une partie bombée vers l'extérieur (19) qui présente dans sa paroi ou sur sa face intérieure un moyen de fixation (20), de préférence un filetage.

7. Fourche avant selon la revendication 1 ou 2, **caractérisée en ce qu'**il est prévu dans la zone du haut et/ou de la face avant de la tête de fourche (4) un palier articulé (29) pour la fixation articulée d'une fixation de guidon (13), ainsi qu'une tige filetée (30) également articulée, qui dépasse vers l'extérieur.

8. Fourche avant selon la revendication 1 ou 2, **caractérisée en ce qu'**un cylindre (32) qui est parallèle axialement aux perçages (6', 7') et qui dépasse vers le haut est formé sur la tête de fourche (4) afin de recevoir une fixation de guidon (13).

9. Cadre et fourche avant pour bicyclettes selon l'une des revendications 1 à 8, une tête de direction (2) étant disposée sur le cadre (1) en vue de la fixation de la fourche avant (3), **caractérisés en ce que** la tête de direction (2) est conçue comme un manchon cylindrique, et un palier est disposé entre la tête de direction (2) et chaque bride de fixation (6, 7).

10. Cadre et fourche avant selon la revendication 9, **caractérisés en ce que** pour relier le cadre (1) à la fourche avant (3), une cheville (8), de préférence un tube cylindrique creux qui traverse la tête de direction (2), est placée et fixée dans les perçages (6', 7') de la bride de fixation (6, 7).

11. Cadre et fourche avant selon la revendication 9, **caractérisés en ce que** des perçages filetés sont formés dans la tête de direction (2), et à partir de chaque bride de fixation (6, 7) une tige filetée (11, 12) traversant en rotation ladite bride (6, 7) est vissée dans le perçage fileté correspondant.
